# EUROPÄISCHE PATENTSCHRIFT

(11) **EP 1 151 257 B1**
(45) Veröffentlichungstag und Bekanntmachung des Hinweises auf die Patenterteilung: **09.02.2005**
(21) Anmeldenummer: 00905049.3
(22) Anmeldetag: 10.02.2000
(51) Int. Cl.: G01K 3/06, G01K 7/16

(54) **SENSOR UND VERFAHREN ZU DESSEN HERSTELLUNG**
SENSOR AND METHOD FOR ITS PRODUCTION
CAPTEUR ET SON PROCEDE DE FABRICATION

(30) Priorität: 10.02.1999 DE 19905384
(43) Veröffentlichungstag der Anmeldung: 07.11.2001
(73) Patentinhaber: Holzschuh GmbH & Co. KG, 75438 Knittlingen-Freudenstein (DE)
(72) Erfinder: MINDE, Walter, D-74632 Kirchensall (DE)
(74) Vertreter: Pfiz, Thomas, Dr.
(86) Internationale Anmeldenummer: PCT/EP2000/001095
(87) Internationale Veröffentlichungsnummer: WO 2000/047963

(56) Entgegenhaltungen:
- EP-A- 0 299 629
- EP-A- 0 547 750
- EP-A- 0 726 450
- GB-A- 2 207 509
- US-A- 4 246 786

## Beschreibung

Die Erfindung betrifft einen Sensor gemäß dem Oberbegriff des Anspruchs 1. Ein solcher Sensor ist aus der Patentschrift US-A-42 46 786 bekannt. Die Erfindung betrifft weiter ein Verfahren zur Herstellung eines Sensors, gemäß dem Anspruch 13.

Zur Verbindung von Sensoren mit nachgeordneten Übertragungsgliedem einer Meßkette ist es bekannt, das Meßglied des Sensors über Kabel oder Drähte als Anschlußelemente an einen Steckverbinder anzuschließen. Insbesondere im Bereich der Automobiltechnik werden dabei hohe Anforderungen an die mechanische Belastbarkeit gestellt, während zugleich eine einfache Herstellung ermöglicht werden soll.

Bei Temperatursensoren der eingangs genannten Art sind Wärmeleitkörper zur physikalischen Temperaturmittelung über einen räumlich ausgedehnten Meßbereich vorgesehen. Zu diesem Zweck werden beschichtete Leiterplatten eingesetzt, bei denen Leiterbahnen zugleich als elektrische Anschlußleiter und als Wärmeleitfläche dienen. Hierbei hat sich als nachteilig herausgestellt, daß die mechanische Festigkeit der Anordnung vergleichsweise gering ist, die gesonderte Montage der Steckkontakte fehleranfällig ist und durch Umgebungseinflüsse an den Wärmeleitflächen Parallelstromkreise zu den elektrischen Meßstromkreisen entstehen können, welche die Messung verfälschen.

Ausgehend hiervon liegt der Erfindung die Aufgabe zugrunde, eine Sensoranordnung anzugeben, welche mechanisch belastbar ist und insbesondere als Temperaturfühleranordnung auch unter extremen Bedingungen einen zuverlässigen Einsatz gewährleistet. Weiter soll ein vorteilhaftes Verfahren zur einfachen Herstellung eines solchen Sensors angegeben werden.

Zur Lösung dieser Aufgabe werden die in den Patentansprüchen 1 und 13 angegebenen Merkmalskombinationen vorgeschlagen. Vorteilhafte Ausgestaltungen und Weiterbildungen der Erfindung ergeben sich aus den abhängigen Ansprüchen.

Zur baulichen Vereinfachung wird vorgeschlagen, daß die Schnitteile in einer gemeinsamen Ebene angeordnet sind. Eine weitere herstellungstechnische Vereinfachung ergibt sich dadurch, daß die Schnitteile durch Zerteilen eines gemeinsamen, vorzugsweise aus Kupfer oder einer Kupferlegierung bestehenden Metallblechstreifens gebildet sind.

Zur Fixierung der Anschlußelemente in gegeneinander isolierter Anordnung ist es vorteilhaft, wenn die Schnitteile mit ihren Schnittflächen Trennspalte begrenzen und die Tragstruktur die Trennspalte zumindest bereichsweise ausfüllt oder überbrückt. Eine weitere Verbesserung des mechanischen Aufbaus ergibt sich dadurch, daß die Tragstruktur eine die Trennspalte an den Breitseiten der Schnitteile überbrückende Gitterstruktur aufweist. Um eine zusätzliche Schutzwirkung gegen äußere Einflüsse insbesondere bei Messung in chemisch aggressiven Medien zu erzielen, kann die Tragstruktur eine die Schnitteile breitseitig überdeckende Schutzschicht bzw. einen Schutzfilm aufweisen. Vorteilhafterweise ist die Tragstruktur als Spritzgußteil ausgebildet.

Gemäß der Erfindung ist es vorgeschen, daß mindestens zwei elektrische Anschlußleiter bildende Schnitteile an ihrem freien Ende als Steckkontaktzunge ausgebildet sind. Gemäß einer weiteren besonders vorteilhaften Ausgestaltung der Erfindung ist es vorgesehen, daß die Tragstruktur ein die Steckkontaktzungen umschließendes Stekkergehäuse aufweist. Damit kann mit einer geringen Zahl von Bauteilen ein besonders zuverlässiger Anschluß des Sensormeßglieds erreicht werden.

Zur räumlich integrierenden Temperaturmessung wird vorgeschlagen, daß das Meßglied als Temperaturfühlglied ausgebildet ist, und daß mindestens ein als Wärmeleitkörper ausgebildetes Schnitteil mit dem Temperaturfühlglied wärmeleitend verbunden ist. Um eine weitgehend lineare Abhängigkeit der physikalischen Meßgröße von der Temperatur zu erhalten, kann das Temperaturfühlglied durch einen metallischen Fühlwiderstand, insbesondere einen Platinwiderstand gebildet sein. Im Hinblick auf störende Umgebungseinflüsse ist es von Vorteil, wenn der Fühlwiderstand in ein Isoliergehäuse aus Kunststoff eingebettet und über eine das Isoliergehäuse durchsetzende gesonderte Wärmeleitfahne mit dem Wärmeleitkörper verbunden ist.

Ein mechanisch vorteilhafter Aufbau wird dadurch erzielt, daß der Wärmeleitkörper einen streifenförmigen Wärmeübertragungsteil und zwei gabelförmig an dem Wärmeübertragungsteil abstehende, einen Anschlußbereich für die elektrischen Anschlußleiter seitlich begrenzende Stützschenkel aufweist.

Gemäß der Erfindung ist der Wärmeleitkörper potentialfrei von den elektrischen Anschlußleitern getrennt angeordnet. Durch diese Maßnahme wird eine Erhöhung der Meßgenauigkeit erreicht und eine Verringerung der mechanischen Belastung des Sensors ermöglicht.

In verfahrensmäßiger Hinsicht wird die eingangs genannte Aufgabe dadurch gelöst, daß die Anschlußelemente als Schnitteile aus Blechmaterial ausgeschnitten werden, und daß die Schnitteile durch Anformen einer Tragstruktur aus Kunststoff im Abstand voneinander fixiert werden.

Ein besonders vorteilhafter und einfach zu automatisierender Verfahrensablauf wird dadurch erreicht, daß die Schnitteile aus einem gemeinsamen Metallblechstreifen durch Scherschneiden unter Bildung eines über Verbindungsstege zusammenhängenden Blechzuschnitts ausgeschnitten werden, und daß die Verbindungsstege in einem zugleich zum Anformen der Tragstruktur ausgebildeten Folgewerkzeug durchtrennt werden.

Vorteilhafterweise wird die Tragstruktur durch Schäumen, Gießen, Umpressen, Sintern oder Zementieren vorzugsweise einstückig angeformt.

Im folgenden wird die Erfindung anhand der in der Zeichnung in schematischer Weise dargestellten Ausführungsbeispiele näher erläutert. Es zeigen
- Fig. 1: einen Temperatursensor mit durch einen Blechzuschnitt gebildeten Anschlußelementen und einem angeformten Steckergehäuse in der Draufsicht;
- Fig. 2: einen Schnitt entlang der Linie 2-2 der Fig. 1;
- Fig. 3: den Blechzuschnitt des Sensors nach Fig. 1 in der Draufsicht;
- Fig.4: eine abgewandelte Ausführungsform eines Blechzuschnitts in einer Darstellung entsprechend Fig. 3; und
- Fig. 5: den Sensor nach Fig. 1 mit einem zusätzlichen Verstärkungsgitter in einer perspektivischen Ansicht.

Der in der Zeichnung dargestellte Temperatursensor 10 dient zur räumlichen integrierenden Temperaturmessung und besteht im wesentlichen aus einem Temperaturfühlglied 12, mehreren durch einen Blechzuschnitt gebildeten Anschlußelementen 14, 16 sowie einer Tragstruktur 18 aus Kunststoff zur isolierenden Fixierung der Anschlußelemente 14, 16.

Das Temperaturfühlglied 12 weist einen nicht gezeigten Platinwiderstand auf, der in ein Isoliergehäuse 20 aus Kunststoff eingebettet ist. Zur Messung des elektrischen Widerstands sind zwei bahnförmige elektrische Anschlußleiter 14 als Anschlußelemente vorgesehen, die über Kontaktstellen 22 mit dem Platinwiderstand verbunden sind. Des weiteren ist der Platinwiderstand über eine Wärmeleitfahne 24 und eine Kontaktstelle 26 mit dem einen Wärmeleitkörper bildenden Anschlußelement 16 thermisch gekoppelt. Der Wärmeleitkörper 16 weist einen streifenförmigen Wärmeübertragungsteil 28 auf, welcher beispielsweise im Luftstrom einer Kraftfahrzeug-Klimaanlage eine über den Strömungsquerschnitt integrierende Temperaturmessung ermöglicht. Zur Verbindung mit der Tragstruktur weist der Wärmeleitkörper 16 im Bereich des Temperaturfühlglieds 12 an dem Übertragungsteil 28 gabelförmig abstehende Stützschenkel 30 auf, welche den Anschlußbereich für die elektrischen Anschlußleiter 14 seitlich begrenzen.

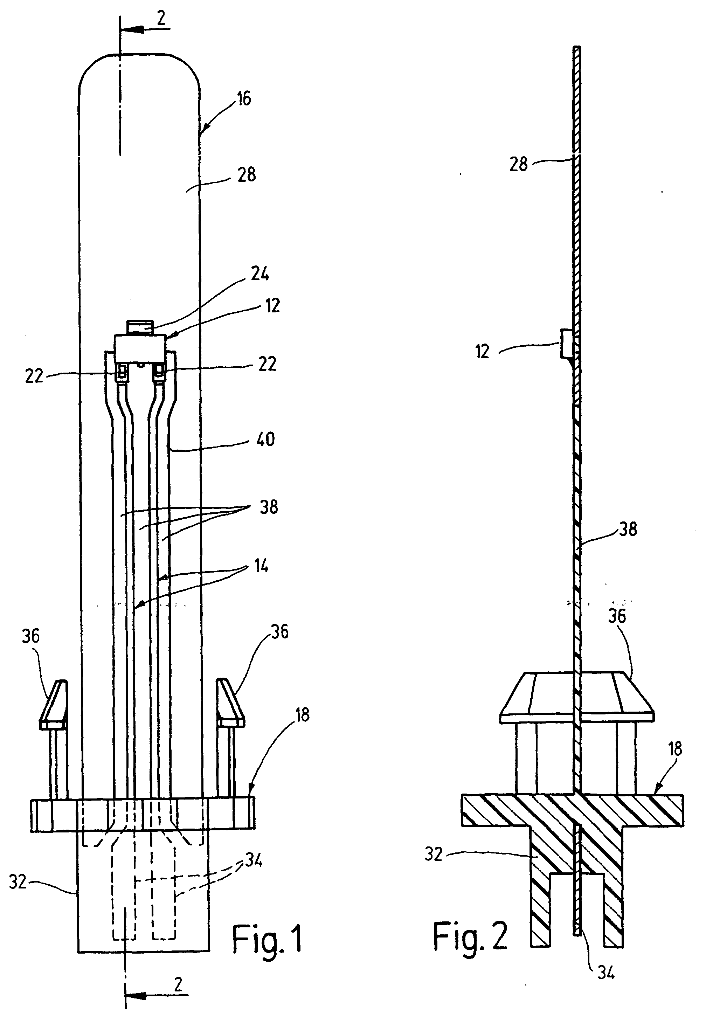

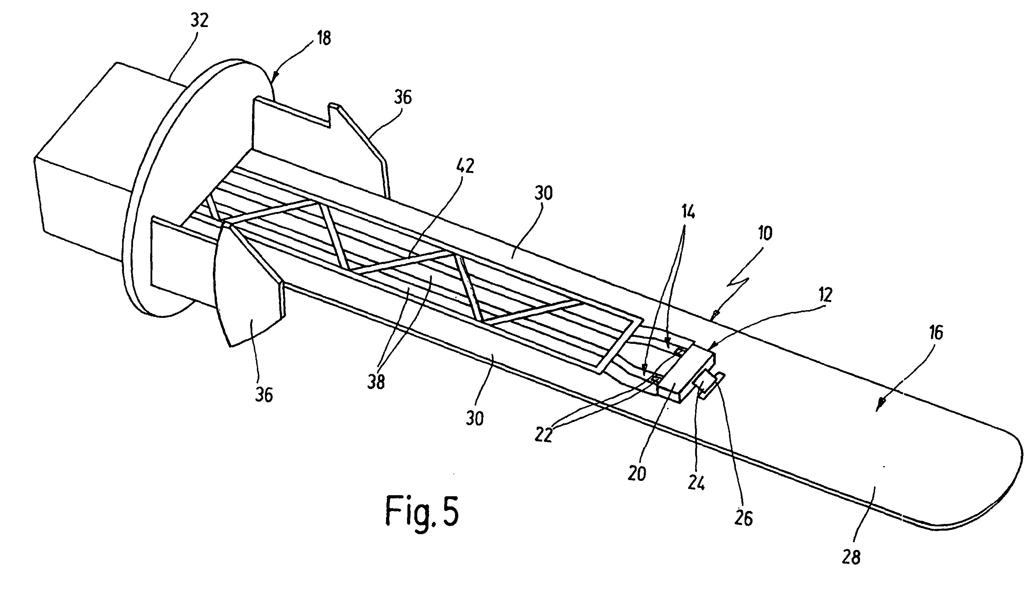

Die an den Anschlußelementen 14, 16 angeformte Tragstruktur 18 besteht zweckmäßig als Spritzgußteil aus mehreren einstückig verbundenen Elementen. Als elektrisch isolierender Werkstoff kann beispielsweise ein Polyamid, Polycarbonat, Polyphthal-Amid oder auch Silikon eingesetzt werden. Wie insbesondere aus Fig. 1 und 2 ersichtlich, weist die Tragstruktur ein Steckergehäuse 32 auf, welches an den freien Enden der Stützschenkel 30 gehalten ist und die als Steckkontaktzungen 34 ausgebildeten Endabschnitte der Anschlußleiter 14 umschließt. An dem Steckergehäuse 32 sind von der Paarungsseite abgewandte Rastzungen 36 angeformt, welche in einer Wandöffnung eines Strömungskanals verrastbar sind. Weiterhin weist die Tragstruktur 18 streifenförmige Abstandshalter 38 auf, welche die Trennspalte 40 zwischen den Anschlußleitem 14 ausfüllen. Wie in Fig. 5 gezeigt, kann die Tragstruktur eine verstärkende Gitterstruktur 42 umfassen, welche die Trennspalte 40 an den Breitseiten der Schnitteile 14, 16 zusätzlich überbrückt. Denkbar ist es auch, daß die Tragstruktur 18 einen die Anschlußelemente 14, 16 breitseitig überdeckenden Schutzfilm aufweist (nicht gezeigt).

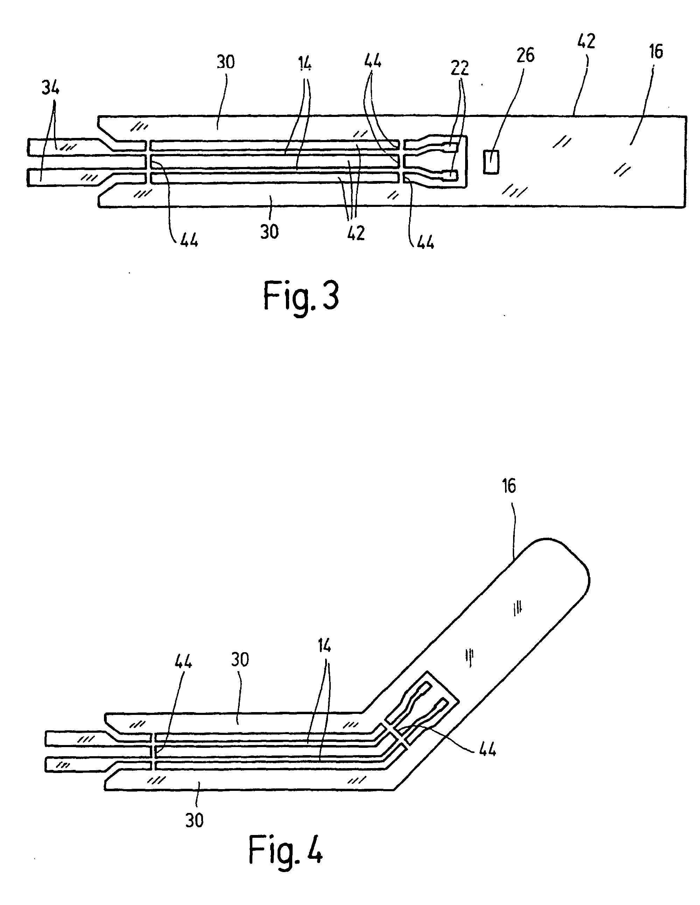

Wie aus Fig. 3 und 4 ersichtlich, werden die Anschlußelemente als Schnitteile 14, 16 aus einem gemeinsamen Blechstreifen ausgeschnitten. Dabei wird in einem ersten Arbeitsgang mit einer Schneidmatrize ein zusammenhängender Blechzuschnitt 42 hergestellt, in welchem die Anschlußleiter 14 über die Trennspalte 40 überbrückende Verbindungsstege 44 untereinander und mit den Stützschenkeln 30 fest verbunden sind. Der Blechzuschnitt 42 kann dabei in einer Ebene gerade langgestreckt oder abgebogen sein. Grundsätzlich sind beliebige Schnittgeometrien denkbar, um den Verhältnissen am Meßort Rechnung zu tragen. Der solchermaßen vorbereitete Blechzuschnitt 42 wird dann in einem weiteren Arbeitsgang in ein Folgewerkzeug eingesetzt, in welchem zunächst die Verbindungsstege 44 durchtrennt werden und sodann die Tragstruktur 18 angespritzt wird.

## Patentansprüche

1. Sensor, insbesondere Temperatursensor, mit einem Meßglied (12) und mehreren als elektrische Anschlußleiter und/oder Wärmeleitkörper ausgebildeten, über jeweils eine Kontaktstelle (22,26) mit dem Meßglied (12) verbundenen Anschlußelementen (14,16), wobei die Anschlußelemente durch Schnitteile (14,16) aus Blechmaterial gebildet sind und die Schnitteile (14,16) durch eine angeformte Tragstruktur (18) aus Kunststoff fixiert im Abstand voneinander gehalten sind, **dadurch gekennzeichnet, daß** mindestens zwei elektrische Anschlußleiter bildende Schnitteile (14) an ihrem freien Ende als Steckkontaktzunge (34) ausgebildet sind, und daß der Wärmeleitkörper (16) potentialfrei von den elektrischen Anschlußleitern (14) getrennt angeordnet ist.

2. Sensor nach Anspruch 1, **dadurch gekennzeichnet, daß** die Schnitteile (14,16) in einer gemeinsamen Ebene angeordnet sind.

3. Sensor nach Anspruch 1 oder 2, **dadurch gekennzeichnet, daß** die Schnitteile (14,16) aus einem gemeinsamen, vorzugsweise aus Kupfer oder einer Kupferlegierung bestehenden Metallblechstreifen (42) gebildet sind.

4. Sensor nach einem der Ansprüche 1 bis 3, **dadurch gekennzeichnet, daß** die Schnitteile (14,16) mit ihren Schnittflächen Trennspalte (40) begrenzen, und daß die Tragstruktur (18:38) die Trennspalte (40) zumindest bereichsweise ausfüllt oder überbrückt.

5. Sensor nach Anspruch 4, **dadurch gekennzeichnet, daß** die Tragstruktur (18) eine die Trennspalte (40) an den Breitseiten der Schnitteile (14,16) überbrückende Gitterstruktur (42) aufweist.

6. Sensor nach einem der Ansprüche 1 bis 5, **dadurch gekennzeichnet, daß** die Tragstruktur (18) eine die Schnitteile (14,16) breitseitig überdeckende Schutzschicht aufweist.

7. Sensor nach einem der Ansprüche 1 bis 6, **dadurch gekennzeichnet, daß** die Tragstruktur (18) als Spritzgußteil ausgebildet ist.

8. Sensor nach einem der Ansprüche 1 bis 7, **dadurch gekennzeichnet, daß** die Tragstruktur (18) ein die Steckkontaktzungen (34) umschließendes Steckergehäuse (32) aufweist.

9. Sensor nach einem der Ansprüche 1 bis 8, **dadurch gekennzeichnet, daß** das Meßglied (12) als Temperaturfühlglied (12) ausgebildet ist, und daß mindestens ein als Wärmeleitkörper ausgebildetes Schnitteil (16) zur räumlich integrierenden Temperaturmessung mit dem Temperaturfühlglied (12) wärmeleitend verbunden ist.

10. Sensor nach Anspruch 9, **dadurch gekennzeichnet, daß** das Temperaturfühlglied (12) durch einen metallischen Fühlwiderstand, insbesondere einen Platinwiderstand gebildet ist.

11. Sensor nach Anspruch 10, **dadurch gekennzeichnet, daß** der Fühlwiderstand in ein Isoliergehäuse (20) aus Kunststoff eingebettet ist und über eine das Isoliergehäuse durchsetzende gesonderte Wärmeleitfahne (26) mit dem Wärmeleitkörper (16) verbunden ist.

12. Sensor nach einem der Ansprüche 1 bis 11, **dadurch gekennzeichnet, daß** der Wärmeleitkörper (16) einen streifenförmigen Wärmeübertragungsteil (28) und zwei gabelförmig an dem Wärmeübertragungsteil abstehende, einen Anschlußbereich für die elektrischen Anschlußleiter (14) seitlich begrenzende Stützschenkel (30) aufweist.

13. Verfahren zur Herstellung eines Sensors, insbesondere Temperatursensors, nach einem der vorhergehenden Ansprüche, bei welchem ein Messglied (12) über jeweils eine Kontaktstelle (22,26) mit mehreren als elektrische Anschlussleiter und/oder Wärmeleitkörper ausgebildeten Anschlusselementen (14,16) verbunden wird, wobei die Anschlusselemente als Schnitteile (14,16) aus einem gemeinsamen Metallblechstreifen durch Scherschneiden unter Bildung eines über Verbindungsstege (44) zusammenhängenden Blechzuschnitts (42) ausgeschnitten werden und die Schnitteile (14,16) durch Anformen einer Tragstruktur (18) aus Kunststoff im Abstand voneinander fixiert werden, **dadurch gekennzeichnet, dass** die Verbindungsstege (44) in einem zugleich zum Anformen der Tragstruktur (18) ausgebildeten Werkzeug durchtrennt werden.

14. Verfahren nach Anspruch 13, **dadurch gekennzeichnet, dass** die Tragstruktur (18) durch Schäumen, Gießen, Umpressen, Sintern oder Zementieren vorzugsweise einstückig angeformt wird.

## Claims

1. Sensor, particularly temperature sensor, comprising a measuring element (12), and comprising a plurality of connection elements (14, 16) which are designed as electric connection leads and/or heat-conducting bodies and are connected to the measuring element (12) via a respective contact point (22, 26), the connection elements consisting of sheet-metal blankings (14, 16), and the blankings (14, 16) being held fixed at a distance from one another by a formed-on plastic support structure (18), **characterized in that** at least two blankings (14) constituting electric connection leads are designed, at the free end, as a plug-in contact blade (34), and the heat-conducting body (16) is separated, such that it is electrically isolated, from the electric connection leads (14).

2. Sensor according to claim 1, **characterized in that** the blankings (14, 16) are disposed in a common plane.

3. Sensor according to either of claims 1 or 2, **characterized in that** the blankings (14, 16) are formed from a common sheet-metal strip (42), preferably of copper or a copper alloy.

4. Sensor according to any one of claims 1 to 3, **characterized in that** the cut faces of the blankings (14, 16) delimit separating gaps (40), and the support structure (18; 38) fills or bridges the separating gaps (40), at least in portions.

5. Sensor according to claim 4, **characterized in that** the support structure (18) has a lattice structure (42) which bridges the separating gaps (40) on the broad sides of the blankings (14, 16).

6. Sensor according to any one of claims 1 to 5, **characterized in that** the support structure (18) has a protective layer covering the blankings (14, 16) on the broad side.

7. Sensor according to any one of claims 1 to 6, **characterized in that** the support structure (18) is formed as an injection-moulded part.

8. Sensor according to any one of claims 1 to 7, **characterized in that** the support structure (18) has a connector casing (32) enclosing the plug-in contact blades (34).

9. Sensor according to any one of claims 1 to 8, **characterized in that** the measuring element (12) is designed as a temperature sensing element (12), and at least one blanking (16) designed as a heat-conducting body is connected in a heat-conducting manner to the temperature sensing element (12) for the purpose of spatially integrating temperature measurement.

10. Sensor according to claim 9, **characterized in that** the temperature sensing element (12) consists of a metallic sensing resistance element, particularly a platinum resistance element.

11. Sensor according to claim 10, **characterized in that** the sensing resistance element is embedded in a plastic insulating casing (20) and connected to the heat-conducting body (16) via a separate heat-conducting lug (26) which passes through the insulating casing.

12. Sensor according to any one of claims 1 to 11, **characterized in that** the heat-conducting body (16) has a strip-type heat-transfer part (28) and two support limbs (30) which project in the form of a fork on the heat-transfer part and laterally delimit a connection region for the electric connection leads (14).

13. Method for producing a sensor, particularly a temperature sensor, according to any one of the preceding claims, in which a measuring element (12) is connected, via a respective contact point (22, 26), to a plurality of connection elements (14, 16) which are designed as electric connection leads and/or heat-conducting bodies, the connection elements being cut out as blankings (14, 16) from a common sheet-metal strip by shearing, forming a sheet-metal blank (42) which coheres via joining webs (44), and the blankings (14, 16) being fixed at a distance from one another by forming-on a plastic support structure (18), **characterized in that** the joining webs (44) are severed in a tool which is also designed for forming-on the support structure (18).

14. Method according to claim 13, **characterized in that** the support structure (18) is formed-on, preferably integrally, by foaming, casting, moulding-on, sintering or cementing.

## Revendications

1. Capteur, en particulier capteur de température, comprenant un organe ou dispositif de mesure (12) et plusieurs éléments de raccordement (14, 16) conçus comme des conducteurs de raccordement électriques et/ou des corps thermoconducteurs, reliés par respectivement un point de contact (22, 26) au dispositif de mesure (12), les éléments de raccordement étant formés par des flans (14, 16) réalisés en un matériau de tôle et les flans (14, 16) étant maintenus en étant fixés à distance les uns des autres par une structure de support (18) formée dessus en matière plastique, **caractérisé en ce qu'**au moins deux flans (14) formant des conducteurs de raccordement électriques sont conçus sur leur extrémité libre comme une lame à fiche ou languette de contact enfichable (34), et **en ce que** le corps thermoconducteur (16) est disposé hors tension en étant séparé des conducteurs de raccordement électriques (14).

2. Capteur selon la revendication 1, **caractérisé en ce que** les flans (14, 16) sont disposés dans un plan commun.

3. Capteur selon la revendication 1 ou 2, **caractérisé en ce que** les flans (14, 16) sont formés à partir d'une bande de tôle métallique (42) commune, constituée de préférence de cuivre ou d'un alliage de cuivre.

4. Capteur selon l'une des revendications 1 à 3, **caractérisé en ce que** les flans (14, 16) délimitent avec leurs surfaces de coupe des fentes de séparation (40) et **en ce que** la structure de support (18 ; 38) surmonte ou remplit, au moins par zone, les fentes de séparation (40).

5. Capteur selon la revendication 4, **caractérisé en ce que** la structure de support (18) comprend une structure de grille (42) surmontant les fentes de séparation (40) sur les côtés larges des flans (14, 16).

6. Capteur selon l'une des revendications 1 à 5, **caractérisé en ce que** la structure de support (18) comprend une couche de protection recouvrant les flans (14, 16) sur les côtés larges.

7. Capteur selon l'une des revendications 1 à 6, **caractérisé en ce que** la structure de support (18) est conçue comme une pièce moulée par injection.

8. Capteur selon l'une des revendications 1 à 7, **caractérisé en ce que** la structure de support (18) comprend un boîtier de fiches (32) entourant les lames à fiche (34).

9. Capteur selon l'une des revendications 1 à 8, **caractérisé en ce que** le dispositif de mesure (12) est conçu comme un dispositif de sonde de température (12), et **en ce qu'**au moins un flanc (16) réalisé en tant que corps thermoconducteur (16) est relié de façon thermoconductrice à l'élément de sonde de température (12), en vue d'une mesure spatiale intégrante de la température.

10. Capteur selon la revendication 9, **caractérisé en ce que** le dispositif de sonde de température (12) est formé par une résistance de sonde métallique, en particulier une résistance en platine.

11. Capteur selon la revendication 10, **caractérisé en ce que** la résistance de sonde est encastrée dans un boîtier isolant (20) en matière plastique et est reliée au corps thermoconducteur (16) par l'intermédiaire d'une languette thermoconductrice (26) séparée traversant le boîtier isolant.

12. Capteur selon l'une des revendications 1 à 11, **caractérisé en ce que** le corps thermoconducteur (16) comprend un élément de transfert de chaleur (28) en forme de bande et deux branches d'appui (30) formant une fourche dépassant de l'élément de transfert de chaleur et délimitant latéralement une zone de raccordement pour les conducteurs de raccordement électriques ( 14).

13. Procédé de fabrication d'un capteur, en particulier d'un capteur de température, selon l'une des revendications précédentes, dans lequel un dispositif ou organe de mesure (12) est relié par respectivement un point de contact (22, 26) à plusieurs éléments de raccordement (14, 16) conçus comme des conducteurs de raccordement électriques et/ou des corps thermoconducteurs, les éléments de raccordement étant découpés comme des flans (14, 16) à partir d'une bande de tôle métallique commune par cisaillage en formant une pièce découpée en tôle (42) communiquant ou maintenue ensemble par des étais de communication (44) et les flans (14, 16) étant fixés à l'écart les uns des autres par la formation, sur eux, d'une structure de support (18) en matière plastique, **caractérisé en ce que** les étais de communication (44) sont séparés par un outil conçu en même temps pour l'application et la formation de la structure de support (18).

14. Procédé selon la revendication 13, **caractérisé en ce que** la structure de support (18) est formée de préférence en une seule pièce par moussage, coulée, enrobage-moulage, frittage ou cémentation.
